# EUROPÄISCHE PATENTSCHRIFT

(11) **EP 0 616 107 B1**
(45) Veröffentlichungstag und Bekanntmachung des Hinweises auf die Patenterteilung: **13.08.1997**
(21) Anmeldenummer: 94101341.9
(22) Anmeldetag: 29.01.1994
(51) Int. Cl.: E06B 3/96

(54) **Stossverbindung von Hohlprofilabschnitten**
Mitred Connection of profiled members
Raccord à onglet d'éléments profilés

(30) Priorität: 17.03.1993 DE 4308540
(43) Veröffentlichungstag der Anmeldung: 21.09.1994
(73) Patentinhaber: SCHÜCO International KG, D-33609 Bielefeld (DE)
(72) Erfinder: Scheuer, Helmuth, D-32130 Enger (DE)
(74) Vertreter: Stracke, Alexander, Dipl.-Ing.

(56) Entgegenhaltungen:
- EP-A- 0 114 222
- AU-A- 519 079
- CH-A- 494 365
- DE-A- 2 609 388
- DE-A- 3 112 147
- DE-U- 9 215 573
- FR-A- 2 225 605
- GB-A- 2 097 889
- US-A- 2 742 117

## Beschreibung

Die Erfindung bezieht sich auf eine Stoßverbindung in Form einer Eck- oder T-Verbindung zwischen im Winkel zueinander stehenden, mit jeweils mindestens einem einen Anschlag bildenden Außensteg versehenen Profilabschnitten, die mittels darin eingereifender Profilverbinder unter Bildung einer Stoßfuge verbunden sind und bei der im Eckbereich ein die Stoßfuge innenseitig überbrückendes Versteifungsformteil festgelegt ist, wobei das Versteifungsformteil elastisch verformbar ist und sich an den den jeweiligen Anschlag definierenden, innenseitigen Profilstegen unter Spannung stehend abstützt.

Es ist eine Eckverbindung dieser Art bekannt (GB-A-2 097 889), bei der das Versteifungsformteil als Innenseegerring ausgebildet ist. Die Ecke wird durch auf Gehrung geschnittene Profilabschnitte gebildet, die durch Profilverbinder zueinander festgelegt werden. Die Profilabschnitte weisen jeweils einen Anschlagsteg auf, der eine U-förmige Nut bildet, in der der Innenseegerring kraftschlüssig die Gehrungsnut übergreifend zu beiden Seiten der Gehrungsnut festgelegt ist. Durch die Federspannkraft des Innenseegerrings wird eine vorfixierte Lage der Profilabschnitte gesichert. Eine flächenbündige Ausrichtung der Anschlagstege ist mit dem Innenseegerring nicht zu erreichen.

Der Erfindung liegt die Aufgabe zugrunde, eine Stoßverbindung der eingangs genannten Art so zu gestalten, daß die Versteifungsformteile nachträglich, d.h. nach der Verbindung der Profilabschnitte mittels der Profilverbinder, so in den jeweiligen Eck- bzw. Stoßbereich eingebracht werden können, daß sich ein selbsttätiges Ausrichten der zu versteifenden Profilstege ergibt, bei gleichzeitiger Stoßfugenabdekkung. Ferner soll im Bedarfsfall die Möglichkeit bestehen, den Bereich der Stoßfuge mittels Dichtmittel zusätzlich abzudichten.

Diese Aufgabe wird durch die Merkmale des kennzeichnenden Teils des Patentanspruches 1 in Verbindung mit den Merkmalen des Oberbegriffs gelöst.

Durch das dünnwandige, elastisch verformbare Blechform- oder Kunststofformteil wird die gesamte Stoßfuge im wasserführenden Bereich eines Fensters oder einer Tür abgedeckt, die Anschlagstege werden flächenbündig ausgerüstet und es wird eine verdeckte, saubere Abdichtung der Stoßfuge ermöglicht.

Da das die Anschläge ausrichtende Versteifungsformteil elastisch verformbar ist, kann zunächst die aus den beiden Hohlprofilabschnitten hergestellte Stoßverbindung montiert werden und das Versteifungsformteil kann nachträglich in die jeweilige Ecke eingesetzt werden. Dazu ist es nicht erforderlich, daß die Nuten hinterschnitten sind, um die Versteifungsformteile festzulegen. Es ist vollkommen ausreichend, wenn die Anschläge innenseitig aufragende Stege aufweisen, da durch das unter Spannung stehende Versteifungsformteil eine kraftschlüssige Festlegung erfolgt. Durch die elastische Verformbarkeit des Versteifungsformteils werden auch die Toleranzen ausgeglichen, da sich das Teil mehr oder weniger stark verformen und somit anpassen kann. Außerdem entfällt die die Eloxalbeschichtung ggf. beschädigende Trennschraube. Bei einer entsprechenden Auslegung des Versteifungsformteiles ist es auch im nachhinein noch möglich, den Bereich der Stoßfugen mittels einer Dichtungsmasse abzudichten.

Die Form des Versteifungsformteiles richtet sich nach der Art der Stoßverbindung und ist auch profilabhängig. Zweckmäßigerweise wird es jedoch aus einem Federstahlblech gefertigt. Das Versteifungsformteil kann auch aus einem Kunststoff hergestellt werden, wenn dieser sich entsprechend elastisch verformen läßt.

Bei einer vorteilhaften Ausführungsform der Erfindung weist jedes Versteifungsformteil einen winkligen Grundkörper auf, wobei der Winkel zwischen den Flächen des winkelförmigen Grundkörpers knapp über 90° liegt.

Die Erfindung wird noch anhand der Zeichnungen näher erläutert, in denen bevorzugte Ausführungsbeispiele dargestellt sind. Es zeigen:
- Figur 1: ein Fenster in Schnittdarstellung mit einem Versteifungsformteil,
- Fig. 2: eine als Innenecke ausgebildete Stoßverbindung mit noch nicht montierten Versteifungsformteil,
- Fig. 3: eine der Fig. 2 entsprechende Darstellung, jedoch mit dem Versteifungsformteil in der Endlage,
- Fig. 4: eine Stoßverbindung in Form einer T-Verbindung in Explosiv-Darstellung,
- Fig. 5: eine der Fig. 4 entsprechende Darstellung, die den Endzustand der T-Verbindung zeigend, jedoch mit einer zweiten T-Verbindung, die durch einen weiteren horizontalen Hohlprofilabschnitt gebildet ist und die Möglichkeit der Abdichtung der Stoßfuge zeigend,
- Fig. 6: die Montage der Versteifungsformteile zeigend, mit Blick senkrecht auf die vertikale Sprosse,
- Fig. 7: das Versteifungsformteil für eine Stoßverbindung gemäß den Fig. 1 - 3,
- Fig. 8: das Versteifungsformteil der Fig. 7 in einer Seitenansicht und
- Fig. 9 bis 11: Versteifungsformteile für eine nicht dargestellte Außenecke in verschiedenen Darstellungen.

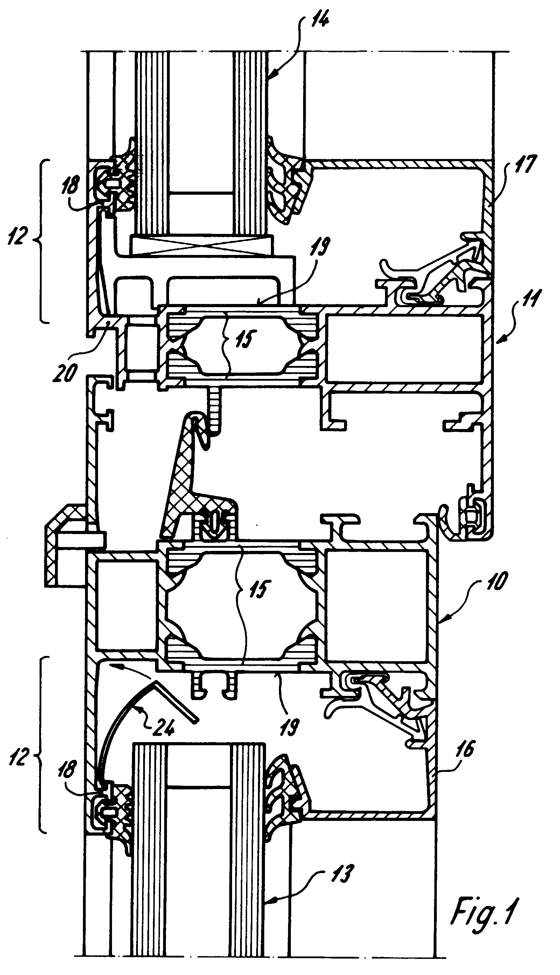

Die Fig. 1 zeigt ein Fenster in einem Horizontalschnitt, welches einen Blendrahmen 10 und einen Flügelrahmen 11 beinhaltet. Aus Darstellungsgründen ist jedoch nur jeweils ein Holm der Rahmen dargestellt. Der Blendrahmen 10 ist als Sprossenprofil ausgebildet. An der Außenseite enthält das Profil des Blendrahmens 10 und des Flügelrahmens 11 jeweils einen Außensteg, der den Anschlag 12 für in den Blendrahmen 10 und in den Flügelrahmen 11 eingesetzte Isolierglasscheiben 13, 14 bildet. Bei den Profilen handelt es sich um Verbundprofile, deren Isolierstege durch das Bezugszeichen 15 gekennzeichnet sind. Die Isolierglasscheiben 13, 14 sind durch innenseitige, den Anschlägen 12 gegenüberliegende Glashalteleisten 16, 17 im Blend- und Flügelrahmen 10, 11 festgelegt. Wie die Fig. 1 deutlich zeigt, sind die einander abgewandten Bereiche der Anschläge 12 innenseitig mit jeweils einer Aufnahmenut für eine die äußere Glasscheibe kontaktierende Dichtung versehen. Die einander zugewandten Nutbegrenzungsstege 18, die den Isolierstegen 15 zugewandt liegen, sind im Querschnitt T-förmig ausgebildet. Diese Nutbegrenzungsstege 18 sind dem sogen. Falz des Profiles zugeordnet. Die Profilfalzhöhe ist durch die Außenfläche der beiden äußeren Isolierstege 15 definiert und durch das Bezugszeichen 19 gekennzeichnet. Die die Anschläge 12 im Bereich der Profilfalzhöhe begrenzenden, innenseitig angeformten, senkrecht zu den Anschlägen 12 stehenden Stege 20, 21 stehen im Versatz zu den die Profilfalzhöhe 19 definierenden Außenflächen der Isolierstege 15 in der Weise, daß sie jeweils in Richtung zu dem anderen Steg versetzt sind. Der Versatz entspricht in etwa der Dicke der Profilwandungen. An den einander abgewandten Seiten der Stege 20, 21 bilden sich dadurch Feuchtigkeitssammelebenen.

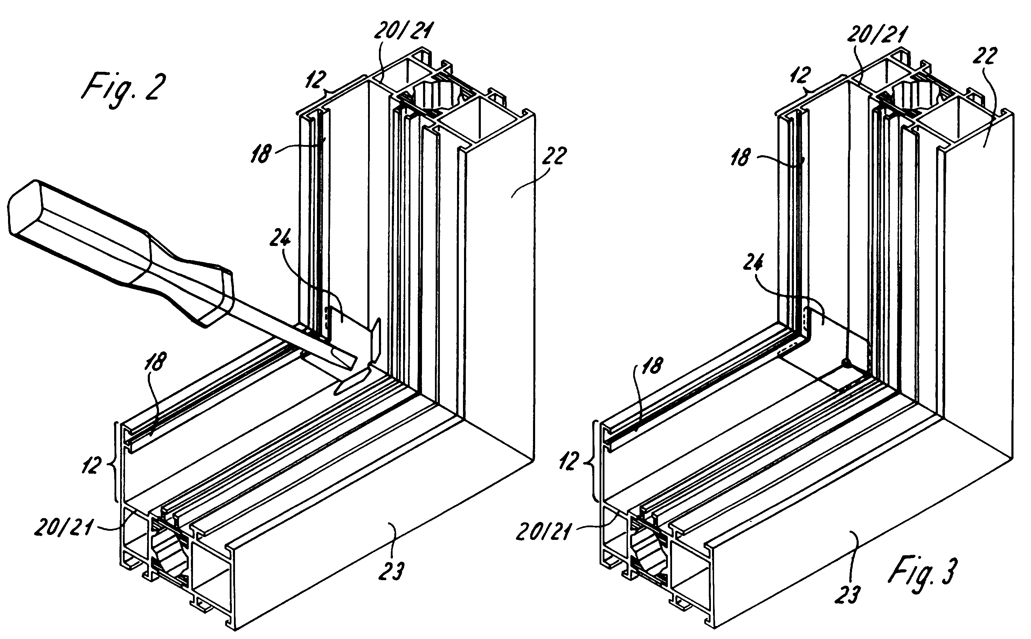

Bei den Stoßverbindungen gemäß den Fig. 2 und 3 handelt es sich um Eckverbindungen in Form von Innenecken. Die auf Gehrung geschnittenen Hohlprofilabschnitte 22, 23 sind in der üblichen Form durch nicht dargestellte Eckverbinder miteinander verbunden. Aus den Figuren ergibt sich, daß die beiden Anschläge 12 der Hohlprofilabschnitte 22, 23 eine auszurichtende Stoßfuge bilden. Dies erfolgt mittels eines noch näher erläuterten Versteifungsformteiles 24, welches winkelförmig ausgebildet ist entsprechend der Ecke und an beiden Stirnenden abgewinkelte Laschen aufweist, so daß die T-förmigen Nutbegrenzungsstege 18 hintergriffen werden. Die gegenüberliegenden abgewinkelten Laschen liegen an den Stegen 20 bzw. 21 an, wobei sich die freien Kanten an einem gegenüber den Stegen 20, 21 im Versatz stehenden Rändern von Schenkeln abstützen, die parallel und im Abstand zu den Anschlägen 12 verlaufen. Dadurch ist es möglich, daß das entsprechend geformte Versteifungsformteil 24 beispielsweise mittels eines Schraubendrehers in die Innenecke eingedrückt wird, wie dies in der Fig. 2 angedeutet ist. Das Versteifungsformteil 24 ist so ausgelegt, daß es im Endzustand gemäß der Fig. 3 unter Spannung steht, so daß es aus der Ecke nicht herausfällt. Sinngemäß erfolgt eine formschlüssige Festlegung, die außerdem noch bewirkt, daß nicht nur die aus den Anschlägen 12 gebildete Stoßfuge abgedeckt, sondern auch daß die Außenflächen der Anschläge 12 fluchtend zueinander ausgerichtet werden. In gleicher Weise werden auch die Stoßflächen der Anschläge einer Außenecke ausgerichtet, wenn das Versteifungsformteil entsprechend ausgelegt ist.

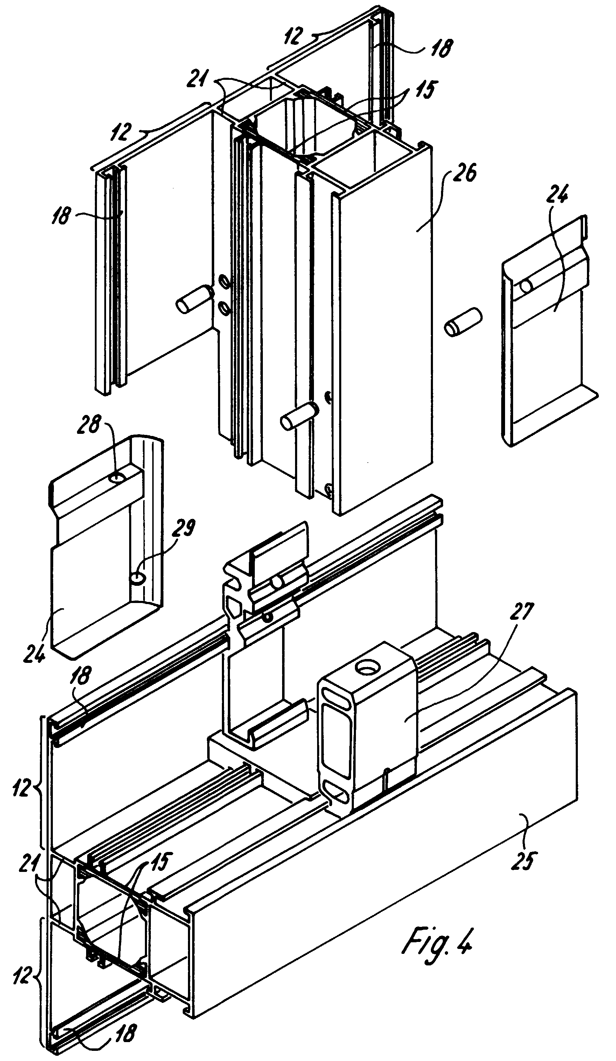

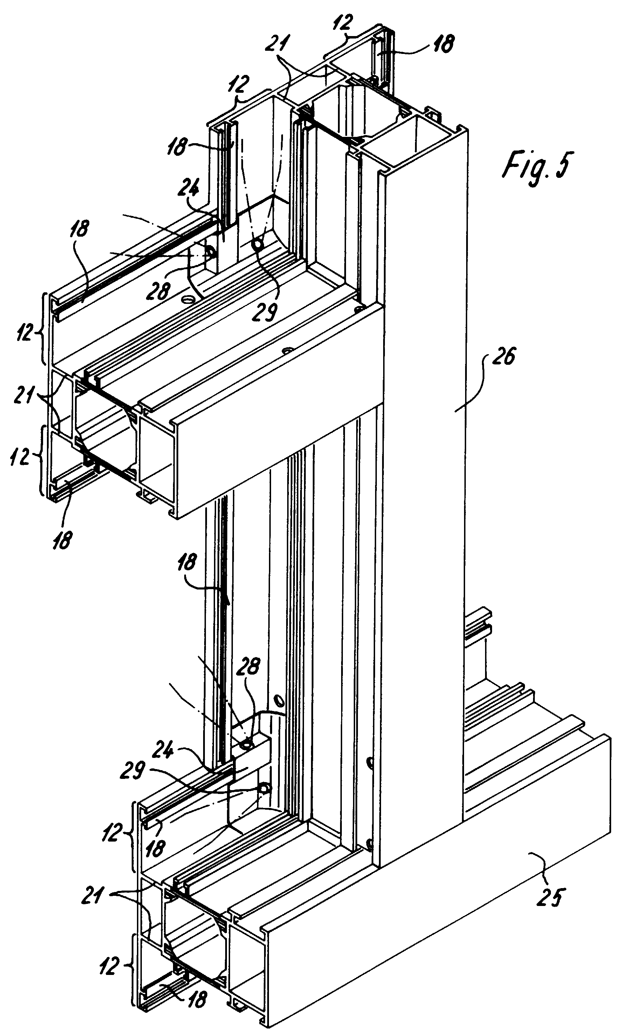

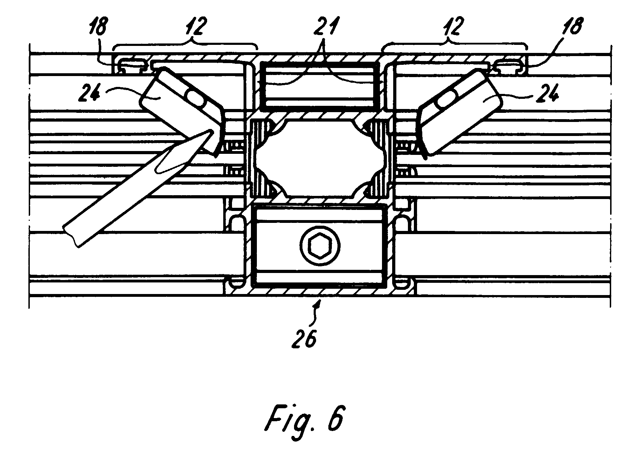

Die Fig. 4 zeigt die Verbindung eines horizontalen Rahmenprofils 25 mit einem Vertikal-Sprossenprofil 26 mittels eines T-Verbinders 27. Das Rahmen- und das Sprossenprofil 25, 26 sind mit jeweils zwei Anschlägen 12 ausgerüstet, die wiederum durch die Nutbegrenzungsstege 18 und 21 begrenzt sind. Für diese T-Verbindung sind zwei Versteifungsformteile 24 notwendig, die die aus den Anschlägen 12 gebildeten Stoßfugen überdecken, wie die Fig. 5 deutlich zeigt. Jedes Versteifungsformteil 24 ist so geformt, daß die Stege 18 umhüllt werden. Dieses Versteifungsformteil 24 ist an der den beiden Stegen 21 zugewandten Seite abgewinkelt, so daß der gegenüberliegende Rand den T-förmigen Nutbegrenzungssteg 18 untergreift und die abgewinkelte Lasche am Steg 21 anliegt. Das Versteifungsformteil 24 ist wiederum so ausgelegt, daß es unter Spannung steht, wenn es gemäß der Fig. 5 in die Endstellung gedrückt wurde. Die Fig. 5 zeigt außerdem noch, daß das gleiche Versteifungsformteil 24 verwendet wird, um die Stoßfugen bei einer T-Verbindung abzudecken, wenn an dem vertikalen Sprossenprofil 26 ein querschnittsgleiches Profil in horizontaler Lage angesetzt wurde. Die Verbindung erfolgt wiederum durch entsprechende Verbinder. Ferner zeigen die beiden Figuren, daß durch Bohrungen 28, 29 ein Dichtmittel zur Abdichtung der Fugen eingespritzt werden kann. Dies erfolgt durch eine andeutungsweise dargestellte Kartusche. Die Fig. 6 zeigt das Einsetzen der Versteifungsformteile 24 für die Verbindung des horizontalen Rahmenprofils 25 mit dem vertikalen Sprossenprofil 26. Danach wird jedes Versteifungsformteil 24 mit der abgewinkelten Lasche hinter die einander zugewandten Stege der Nutbegrenzungsstege 18 gesteckt. Mittels eines geeigneten Werkzeuges wird dann das Versteifungsformteil 24 so zwischen die Nutbegrenzungsstege 18 und die beiden Stege 21 gedrückt, daß die den T-förmigen Nutbegrenzungsstegen 18 gegenüberliegenden Flächen der Versteifungsformteile 24 an den einander abgewandten Flächen der Stege 21 anliegen. Jedes Versteifungsformteil ist so ausgelegt, daß es dann unter Spannung steht.

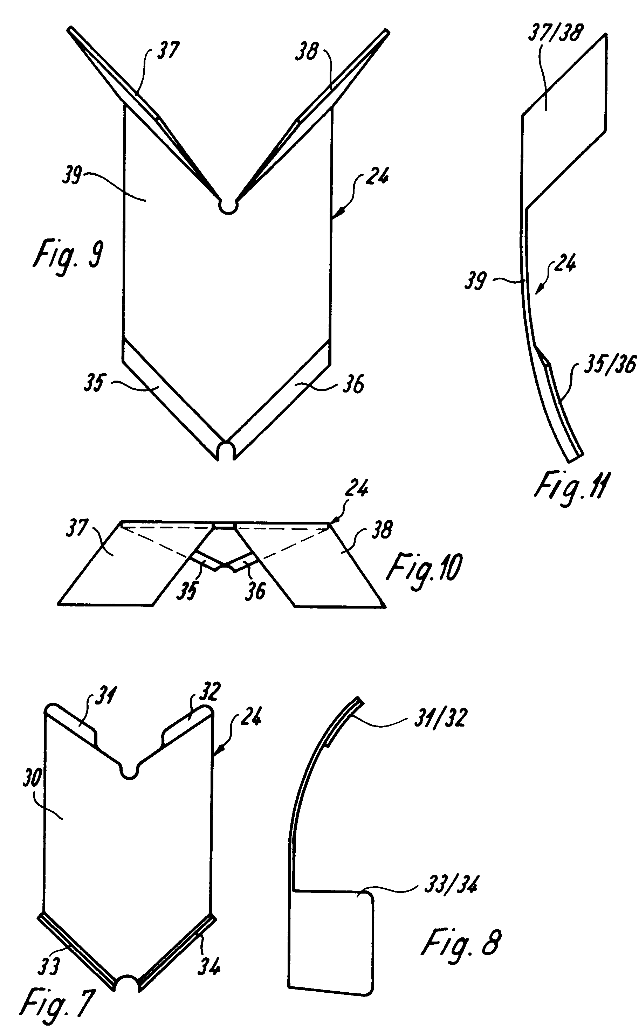

Jedes Versteifungsformteil 24 kann aus einem beständigen Material wie Federstahlblech gefertigt sein. Sie können jedoch aus einem geeigneten, elastischen Kunststoff gefertigt werden. In der Fig. 7 ist ein winkelförmiges Versteifungsformteil 24 für eine Innenecke gemäß den Fig. 1 bis 3 dargestellt. Das Versteifungsformteil 24 besteht aus einem winkelförmigen Grundkörper 30. An der einen Seite sind an dem Grundkörper zwei Federlaschen 31, 32 angeformt, die unter einen stumpfen Winkel zu den Flächen des winkeligen Grundkörpers 30 stehen. Diese Federlaschen 31, 32 hintergreifen bei der Innenecke gemäß den Fig. 2 und 3 die inneren Stege der Nutbegrenzungsstege 18. Durch die winkeligen Federlaschen 31, 32 wird die Maßdifferenz zwischen Nutbreite und Blechdicke des Versteifungsformteils 24 durch die Federspannung ausgeglichen. An der gegenüberliegenden Seite ist der Grundkörper 30 mit zwei weiteren Federlaschen 33, 34 versehen, die jedoch zur anderen Seite hin abgekröpft sind und die sich im eingebauten Zustand an den einander abgewandten Flächen der Entwässerungsfalze abstützen. Der eingeschlossene Winkel zwischen den äußeren Flächen des winkelförmigen Grundkörpers 30 und den Federlaschen 33, 34 ist größer als 90 Grad. Die beiden Teile des winkeligen Grundkörpers 30 stehen unter einem Winkel zueinander, der knapp über 90 Grad liegt. Dadurch wird die Vorspannung nach der Montage erreicht. Der eingeschlossene Winkel zwischen den Flächen des winkelförmigen Grundkörpers 30 und den Federlaschen 31, 32 ist ebenfalls größer als 90 Grad. Aus den Fig. 2 und 3 geht hervor, wie das Versteifungsformteil 24 in die Innenecken eingedrückt wird.

In der Fig. 8 ist das Versteifungsformteil 24 für eine Innenecke in einer Seitenansicht dargestellt. Wie daraus zu erkennen ist, ist der Grundkörper 30 bogenförmig vorgespannt. Diese Vorspannung führt dazu, daß die Federlaschen 31, 32 am Nutbegrenzungssteg 18 einzusetzen und durch die Verkürzung der Länge das Versteifungsformteil 24 in die Innenecke einzusetzen. Dort rasten die unter Vorspannung stehenden Federlaschen 33, 34 in die durch die Stege 21 begrenzte Nut ein und richten die Anschläge 12 fluchtend zueinander aus. Außerdem wird die durch die Anschläge 12 gebildete Stoßfuge innenseitig abgedeckt.

In den Fig. 9 bis 11 ist ein Versteifungsformteil 24 für eine Außenecke dargestellt. Im wesentlichen entspricht dieses Versteifungsformteil 24 dem Versteifungsformteil 24 gemäß den Fig. 7 und 8. Die die Stege der Nutbegrenzungsstege 18 hintergreifenden Federlaschen sind durch die Bezugszeichen 35, 36 gekennzeichnet. Die jeweils einen Entwässerungsfalz begrenzenden steghintergreifenden federnden Laschen sind durch die Bezugszeichen 37, 38 gekennzeichnet. Der Grundkörper ist wiederum winkelförmig ausgebildet und durch das Bezugszeichen 39 gekennzeichnet. Auch aus diesen Figuren geht hervor, daß zunächst die Federlaschen 35, 36 hinter die Stege der Nutbegrenzungsstege 18 gesteckt werden und daß dann mittels eines geeigneten Werkzeuges das Versteifungsformteil 24 in die Außenecke gedrückt wird. Dabei greifen die federnden Laschen 37, 38 wiederum in den Nutgrund des durch Stege begrenzenden Entwässerungsfalzes ein.

## Patentansprüche

1. Stoßverbindung in Form einer Eck- oder T-Verbindung zwischen im Winkel zueinander stehenden, mit jeweils mindestens einem einen Anschlag (12) bildenden Außensteg versehenen Profilabschnitten (22,23), die mittels darin eingreifender Profilverbinder (27) unter Bildung einer Stoßfuge verbunden sind und bei der im Eckbereich ein die Stoßfuge innenseitig überbrückendes Versteifungsformteil (24) festelegt ist, wobei das Versteifungsformteil (24) elastisch verformbar ist und sich an den den jeweiligen Anschlag definierenden innenseitigen Profilstegen (18,20,21) unter Spannung stehend abstützt, **dadurch gekennzeichnet,** daß alle Profilabschnitte als Hohlprofilabschnitte (22, 23) ausgebildet sind, die Dicke des Versteifungsformteiles (24) gegenüber den Stegen der Profilabschnitte (22,23) relativ gering ist, jedes Versteifungsformteil (24) als elastisch verformbares, einen im Querschnitt winkelförmigen Grundkörper (30) aufweisenden Blechform- oder Kunststofformteil ausgebildet ist, und sowohl an einem als auch an dem anderen der winkelförmigen Stirnenden angewinkelte Federlaschen (31,32; 35,36 bzw. 33,34; 37,38) vorhanden sind, wobei der Winkel zwischen den Flächen des winkelförmigen Grundkörpers (30) und den Laschen (31,32,33,34,35,36,37,38) ein stumpfer Winkel ist, wobei die Federlaschen (33,34,35,36) einen T-förmigen Nutbegrenzungssteg (18) hintergreifen und die anderen federnden Laschen (33,34 bzw. 37,38) eine einen Wasserfalz begrenzenden Steg (20 bzw. 21) hintergreifen.

2. Stoßverbindung nach Anspruch 1, dadurch gekennzeichnet, daß die einen Wasserfalz begrenzenden Stege (20,21) gegenüber den die Profilfalztiefe bestimmenden Isolierstegen (15,16) jeweils in Richtung zu dem anderen Steg versetzt sind, wobei dieser Versatz vorzugsweise der Dicke der Stege der Hohlprofilabschnitte (22,23) entspricht.

3. Stoßverbindung in Form einer T-Verbindung nach Anspruch 1, dadurch gekennzeichnet, daß der mittlere Bereich jedes Grundkörpers (30) eine eine Dichtungsaufnahmenut bildende Stege übergreifende Einziehung aufweist.

4. Stoßverbindung nach Anspruch 1, dadurch gekennzeichnet, daß der von den Flächen des winkelförmigen Grundkörpers (30) eingeschlossene Winkel knapp über 90° liegt.

5. Stoßverbindung nach einem oder mehreren der vorhergehenden Ansprüche, dadurch gekennzeichnet, daß jedes Versteifungsformteil (24) mit mindestens einer Bohrung (28,29) zum Einspritzen einer Dichtmasse in den Verbindungsbereich ausgerüstet ist.

## Claims

1. A butt connection in the form of a corner or T-connection between profile portions (22, 23) which are disposed at an angle relative to each other and which are each provided with at least one respective outer limb forming an abutment (12), which profile portions are connected by means of profile connectors (27) engaging therein, forming a butt joint, and in which a shaped stiffening portion (24) which bridges over the butt joint in the inside thereof is fixed in the corner region, wherein the shaped stiffening portion (24) is elastically deformable and is supported under stress against the inside profile limbs (18, 20, 21) defining the respective abutment, characterised in that all profile portions are in the form of hollow profile portions (22, 23), the thickness of the shaped stiffening portion (24) is relatively small relative to the limbs of the profile portions (22, 23), each shaped stiffening portion (24) is in the form of an elastically deformable shaped sheet metal or plastics portion which is elastically deformable and which has a main body (30) of angular cross-section and angled spring plates (31, 32; 35, 36 and 33, 34; 37, 38) are provided both at the one and the other of the angular ends, wherein the angle between the surfaces of the angular main body (30) and the plates (31, 32, 33, 34, 35, 36, 37, 38) is an obtuse angle, wherein the spring plates (33, 34, 35, 36) engage behind a T-shaped groove-defining limb (18) and the other resilient plates (33, 34 and 37, 38) engage behind a limb (20 and 21 respectively) defining a water channel.

2. A butt connection according to claim 1 characterised in that the limbs (20, 21) defining a water channel are respectively displaced towards the other limb relative to the insulating limbs (15, 16) which determine the profile channel depth, wherein said displacement preferably corresponds to the thickness of the limbs of the hollow profile portions (22, 23).

3. A butt connection in the form of a T-connection according to claim 1 characterised in that the middle region of each main body (30) has a constriction engaging over limbs forming a seal-receiving groove.

4. A butt connection according to claim 1 characterised in that the angle included by the surfaces of the angular main body (30) is just over 90°.

5. A butt connection according to one or more of the preceding claims characterised in that each shaped stiffening portion (24) is provided with at least one bore (28, 29) for the injection of a sealing material into the connecting region.

## Revendications

1. Raccord droit en forme de coin ou en T entre des sections profilées (22, 23) formant un angle entre elles, munies chacune d'au moins une nervure extérieure formant une butée (12), sections qui sont assemblées au moyen de connecteurs profilés (27) s'y engageant en formant un raccord et dans lequel est fixé, au niveau de l'angle, un renfort moulé (24) enjambant le raccord à l'intérieur, le renfort moulé (24) étant déformable élastiquement et s'appuyant sous tension sur les nervures profilées intérieures (18, 20, 21) définissant la butée respective, caractérisé en ce que toutes les sections profilées sont conformées en sections de profilés creux (22, 23), l'épaisseur du renfort moulé (24) est relativement faible par rapport aux nervures des sections profilées (22, 23), chaque renfort moulé (24) est conformé en pièce moulée en tôle ou en matière synthétique, déformable élastiquement et présentant un corps de base (30) de section transversale angulaire, et des pattes élastiques (31, 32 ; 35, 36) ou (33, 34 ; 37, 38) coudées tant à l'une qu'à l'autre des extrémités angulaires sont présentes, l'angle entre les surfaces du corps de base angulaire (30) et les pattes (31, 32, 33, 34, 35, 36, 37, 38) étant un angle obtus, les pattes élastiques (33, 34, 35, 36) saisissant par l'arrière une nervure en forme de T (18) de délimitation de rainure et les autres pattes élastiques (33, 34 ou 37, 38) saisissant par l'arrière une nervure (20 ou 21) délimitant une feuillure d'évacuation d'eau.

2. Raccord droit selon la revendication 1, caractérisé en ce que les nervures (20, 21) délimitant une feuillure d'évacuation d'eau sont décalées chacune en direction de l'autre nervure par rapport aux nervures d'isolation (15, 16) définissant la profondeur de feuillure de profilé, ce décalage correspondant de préférence à l'épaisseur des nervures des sections de profilé creux (22, 23).

3. Raccord droit en forme de T selon la revendication 1, caractérisé en ce que la partie centrale de chaque corps de base (39) présente un recul saisissant par le dessus des nervures formant une rainure de réception de joint.

4. Raccord droit selon la revendication 1, caractérisé en ce que l'angle délimité par les surfaces du corps de base angulaire (30) est légèrement supérieur à 90°.

5. Raccord droit selon une ou plusieurs des revendications précédentes, caractérisé en ce que chaque renfort moulé (24) est muni d'au moins un perçage (28, 29) pour injecter une masse d'étanchéité dans la zone d'assemblage.
